# EUROPÄISCHE PATENTSCHRIFT

(11) **EP 1 452 041 B1**
(45) Veröffentlichungstag und Bekanntmachung des Hinweises auf die Patenterteilung: **27.10.2010**
(21) Anmeldenummer: 01990494.5
(22) Anmeldetag: 04.12.2001
(51) Int. Cl.: H04Q 3/00

(54) **VERFAHREN UND NETZVORRICHTUNG ZUM BEREITSTELLEN VON INSBESONDERE PERSONALISIERTEN KOMMUNIKATIONSDIENSTEN IN EINEM KOMMUNIKATIONSSYSTEM**
METHOD AND NETWORK DEVICE FOR RUNNING ESPECIALLY PERSONALISED COMMUNICATION SERVICES IN A COMMUNICATION SYSTEM
PROCEDE ET DISPOSITIF RESEAU POUR METTRE A DISPOSITION EN PARTICULIER DES SERVICES DE COMMUNICATION PERSONNALISES DANS UN SYSTEME DE COMMUNICATION

(43) Veröffentlichungstag der Anmeldung: 01.09.2004
(73) Patentinhaber: Nokia Siemens Networks GmbH & Co. KG, 81541 München (DE)
(72) Erfinder: STRAULINO, Heiko, 82152 Planegg-Martinsried (DE)
(86) Internationale Anmeldenummer: PCT/EP2001/014175
(87) Internationale Veröffentlichungsnummer: WO 2003/049458

(56) Entgegenhaltungen:
- EP-A- 0 969 677
- WO-A-01/72008
- DE-A- 19 814 161
- GURBANI V: "Accessing IN services from SIP networks" INTERNET DRAFT, November 2000 (2000-11), XP002901411

## Beschreibung

Die Erfindung bezieht sich auf ein Verfahren zum Bereitstellen von Kommunikationsdiensten in einem Kommunikationssystem mit den oberbegrifflichen Merkmalen des Patentanspruchs 1 bzw. eine Netzvorrichtung zum Durchführen eines solchen Verfahrens.

Ein solches Verfahren ist aus der WO-A-01 72008 bekannt. Hierbei werden von Einrichtungen Dienste ausgeführt, wozu in den die Dienstelogik ausführenden Einrichtungen diese Dienstelogiken gespeichert sind und zur Ausführung aktiviert werden.

In Kommunikationssystemen, beispielsweise Mobilfunknetzen gemäß dem Standard GSM (Global System for Mobile Communication) oder UMTS (Universal Mobile Telecommunication System), werden Verbindungen zwischen zwei voneinander entfernten Stationen bzw. Netzelementen über in der Regel eine Vielzahl weiterer Netzelemente aufgebaut, damit die beiden endseitigen Stationen miteinander kommunizieren können.

Zur Signalisierung von Verbindungen (Sessions) zwischen insbesondere mobilen Teilnehmern bzw. Stationen ist das Sitzungsinitiierungsprotokoll SIP (Session Initiation Protokoll) bekannt, welches ein Protokoll und eine Netzinfrastruktur beschreibt. Danach werden SIP-Nachrichten von einem Ausgangsteilnehmer bzw. einer ersten Station über in der Regel eine Vielzahl von Signalisierungsservern zu einer zweiten Station als Zielteilnehmer geleitet.
Um in einer solchen Signalisierungsumgebung erweiterte Kommunikationsdienste, wie z.B. Sitzungsweiterleitung (Session Forwarding), Rufnummernübersetzung (Number Translation), Vorausbezahlungsvergebührung (Pre-paid) etc. realisieren zu können, sind verschiedene Ansätze, wie z.B. eine Rufverarbeitungssprache CPL (Call Processing Language), SIP Servlets (SIP-Java Programmierschittstelle), SIP CGI (Common Gateway Interface / allgemeine SIP-Zugangsschnittstelle) etc. in der Diskussion. Ein Dienst besteht dabei üblicherweise aus einer Dienstlogik in Form eines "Programmcodes" und Zustandsinformationen in Form von "Daten". Im Fall von personalisierten Diensten sind diese Zustandsinformationen Stations- bzw. Teilnehmer-spezifisch.
Beim Weiterleiten von Nachrichten führen die Signalisierungsserver die Dienstlogik bzw. deren Anweisungen aus, wobei die Zustandsinformationen einbezogen werden. So kann die Dienstlogik das Verhalten des Signalisierungsservers beeinflussen.
In einer solchen Umgebung entstehen Probleme durch die Möglichkeiten der Verteilung der Dienstlogik und der Zustandsinformationen. Wird.ein neuer Dienst eingeführt, so müssen diese Informationen den an der Ausführung beteiligten Signalisierungsservern zur Verfügung gestellt werden. Ein naheliegender Ansatz wäre, diese Informationen administrativ fest auf einem bestimmten Signalisierungsserver zu installieren. Im Falle von personalisierten Diensten würde dies jedoch erforderlich machen, dass ein Teilnehmer bzw. dessen Station stets den gleichen Signalisierungsserver verwendet. Aus folgenden Gründen ist diese Annahme nicht praktikabel:
a) In Mobilfunknetzen sind die Teilnehmer bzw. deren Stationen zumeist mobil und können nur bzw. müssen dynamisch einen in ihrer Nähe befindlichen Signalisierungsserver verwenden, der sich z.B. in einem lokalen Intranet befindet.
b) Ein Signalisierungsserver kann ausfallen, woraufhin der Teilnehmer bzw. dessen Station einen alternativen Server verwenden können müsste. Auf einem solchen zusätzlich bereit zu stellenden Server müssten die Informationen ebenfalls installiert werden.
c) Üblicherweise kann in Mobilfunknetzen ein Lastverteilungsverfahren verwendet werden, um die Teilnehmer bzw. deren Stationen aus einer Vielzahl von Signalisierungsservern jeweils dem Signalisierungsserver mit der geringsten Auslastung zuzuordnen. Auch diese Möglichkeit würde entfallen oder die Installation der Informationen auf der Vielzahl von Signalisierungsservern erforderlich machen.
   Diese Probleme treten insbesondere bei Systemen auf, wie beispielsweise bei der von 3GPP (Third Generation Partnership Project) definierten Multimedia Subsystem Architektur, gemäß der einer teilnehmerseitigen Station während des Registrierungsvorgangs dynamisch ein Signalisierungsserver aus einer Vielzahl verfügbarer Signalisierungsserver zugewiesen wird.
   IETF-Vorschläge aus dem Internetbereich (IETF: Internet Engineering Task Force), wie "Java Enhanced SIP" (JES) und "Servlet Delivery" (SDLI), beschreiben Verfahren, auf welche Art und Weise Dienstlogik und Zustandsinformationen zusammen mit Signalisierungsnachrichten transportiert werden können. Stationen bzw. Endgeräte "hängen" die Dienstlogik an Nachrichten an, wobei die Signalisierungsserver diese Information extrahieren und die Dienstlogik bei Bedarf ausführen. Jedoch lösen diese Ansätze die vorstehend aufgeführte Problematik nicht zufriedenstellend:
d) In einer mobilen Netzumgebung ist die Bandbreite der Luftschnittstelle eine kostbare Ressource. Es wäre eine Verschwendung dieser Ressource, wenn umfangreiche Dienstlogik und Zustandsinformationen von den Stationen ins Netz übertragen werden.
e) Aus Sicherheitsgründen haben viele Netzbetreiter außerdem große Bedenken, eine beliebige Dienstlogik von teilnehmerseitigen Stationen zu empfangen und auszuführen. Dies könnte die Stabilität des Netzes beeinträchtigen.
f) Außerdem können Änderungen der Zustandsinformationen, die sich durch das Ausführen eines Dienstes ergeben können, nicht dauerhaft gespeichert werden. Dies wäre aber erforderlich, sofern bei erneuter Dienstausführung diese geänderten Zustandsinformationen benötigt werden.
g) Manche Dienste sollten ohne die Beteiligung einer endseitigen Station ausgeführt werden können, z.B. eine Rufweiterleitung bei Nicht-Erreichbarkeit der Station.

Die Aufgabe der Erfindung besteht darin, ein Verfahren zum Bereitstellen von Kommunikationsdiensten in einem Kommunikationssystem mit Blick auf die Verteilung von Dienstlogik und Zustandsinformationen auf Signalisierungsservern zu verbessern bzw. eine Netzvorrichtung zum Durchführen eines solchen Verfahrens vorzuschlagen.

Diese Aufgabe wird durch das Verfahren mit den Merkmalen des Patentanspruchs 1 bzw. die Netzvorrichtung gemäß den Merkmalen des Patentanspruchs 7 gelöst.

Vorteilhafterweise wird demnach eine Dienstlogik, also ein ausführbarer Programmcode, in einem netzseitigen Speicher hinterlegt, auf den netzseitige Stationen zugreifen können, wenn sich eine Station anmeldet bzw. registriert, eine Verbindung für oder zu einer solchen Station aufzubauen ist oder Daten für eine solche Station weiterzuleiten sind. Natürlich ist unter dem Begriff Verbindung nicht nur eine endgültig aufgebaute Kommunikationsverbindung zu verstehen, sondern z.B. auch eine einfache Signalisierung mit Steueranweisungen, Informationsdatenübermittlungen oder dergleichen.

Vorteilhafte Ausgestaltungen sind Gegenstand von abhängigen Ansprüchen.

Zweckmäßigerweise werden zusammen mit der Dienstlogik auch Zustandsinformationen bezüglich solcher Stationen in der Dienst-Datenbank hinterlegt, so dass auch diese abgerufen werden können. Nach einer Veränderung der Dienstlogik oder der Zustandsinformationen sollte von der die Dienstlogik ausführenden Einrichtung ausgehend die Dienstlogik und/oder Zustandsinformationen in der Dienst-Datenbank aktualisiert werden können.

Insbesondere in Mobilfunknetzen sind auch die mobilen Teilnehmer bzw. deren Stationen nicht mehr zwingend auf einen bestimmten in ihrer Nähe befindlichen Signalisierungsserver angewiesen. Beim Ausfall eines Signalisierungsservers kann der Teilnehmer mit seiner Station einfach einen alternativen Server verwenden. Anstelle auf einer Vielzahl von alternativen Servern alle Daten bereitstellen zu müssen, reicht es aus, einige wenige Ersatzserver bzw. Datenbanken im Netz bereitzustellen, welche entweder die Daten z.B. in Spiegeltechnik oder bei Ausfall der eigentlichen Datenbank aus übertragen bekommen. Möglich ist dabei prinzipiell auch die für sich bekannte Übertragung von der Station aus zu der Zugangseinrichtung und darüber in die Dienst-Datenbank.

In Kommunikationsnetzen kann auch weiterhin ein Lastverteilungsverfahren verwendet werden, um die Teilnehmer bzw. deren Stationen aus einer Vielzahl von Signalisierungsservern jeweils dem Signalisierungsserver mit der geringsten Auslastung zuzuordnen.

Vorteilhafterweise wird die Luftschnittstelle nicht mit einer Vielzahl von Dienstlogikdaten belastet. Die Übertragung kann auf ein Minimum oder gar keine solche Übertragungen reduziert werden.

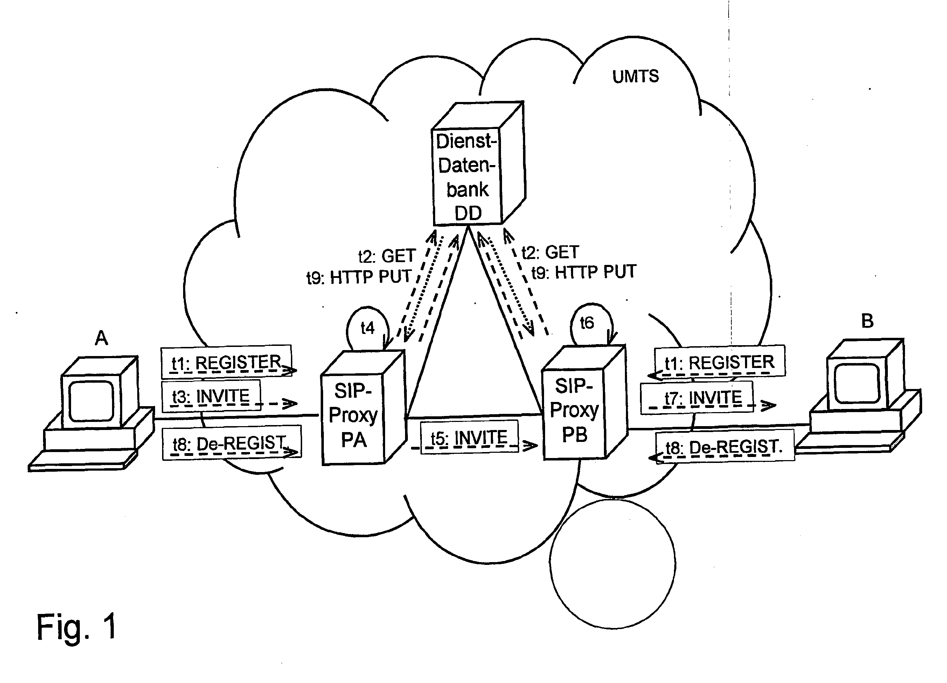

Netzbetreiber können außerdem den Empfang einer beliebigen Dienstlogik von teilnehmerseitigen Stationen sperren oder nur über einen sicher überprüfbaren Registrierungsweg zulassen. Dies würde bei zwar reduzierter Flexibilität aus Sicht der Teilnehmer wegen vorher erforderlicher Registrierung einer neuen Dienstlogik dem Netzbetreiber eine erhöhte Sicherheit bieten.
Auch Änderungen der Zustandsinformationen, die sich durch das Ausführen eines Dienstes ergeben, können auf diese Art und Weise dauerhaft gespeichert werden, was letztendlich das Netz weiter entlastet, da die Anzahl der Übertragungen auf z.B. der Luftschnittstelle zwischen Teilnehmerstation und Netz reduziert werden kann.
Ein Ausführungsbeispiel wird nachfolgend anhand der Zeichnung näher erläutert. Es zeigt die einzige Figur
- Fig. 1: eine Anordnung von Netzeinrichtungen in einem schematischen Kommunikationssystem mit darin skizzierten Verfahrensschritten zum Durchführen eines bevorzugten Verfahrens zum Verteilen von Dienstlogik und Zustandsinformationen auf Signalisierungsservern.

In Fig. 1 ist ein Kommunikationssystem UMTS skizziert, welches vorzugsweise auf Basis des sogenannten Session Initiation Protocol (SIP), also einem Sitzungsinitiierungsprotokoll gesteuert wird. Vorliegend sind lediglich die für das nachfolgend beschriebene Verfahren relevanten Netzelemente bzw. Netzeinrichtungen dargestellt.

Bei dem nachfolgend beschriebenen Ausführungsbeispiel soll eine Kommunikationsverbindung zwischen einer ersten teilnehmerseitigen Station A und einer zweiten teilnehmerseitigen Station B aufgebaut werden, um eine Kommunikation zwischen diesen über das Kommunikationsnetz UMTS zu ermöglichen. Die beiden teilnehmerseitigen Stationen A, B können beliebige Datenendgeräte sein, die vorteilhafterweise das SIP oder ein vergleichbares Protokoll unterstützen. Insbesondere können es kabelgestützte oder funkgestützte Computer und Telefone sein. Möglich ist auch, dass eine dieser Stationen als Server zum passiven Liefern von angeforderten Daten bei einer entsprechenden Anforderung durch die andere Station ausgebildet ist.

Um eine Kommunikationsverbindung zwischen einer der beiden Stationen A, B, und dem Kommunikationsnetz, beispielsweise gemäß UMTS, aufzubauen, sind im Bereich des Zugangsnetzes vom Kommunikationsnetz sogenannte SIP-Proxy PA bzw. PB bereitgestellt. Eine Station A, B, welche mit dem Kommunikationsnetz UMTS verbunden wird, dass heißt insbesondere mit dem entsprechenden SIP-Proxy PA bzw. PB verbunden wird, sendet beim Beispiel des SIP eine sogenannte Register-Nachricht REGISTER zu ihrer Registrierung zu einem ersten Zeitpunkt t1 an die Zugangseinrichtung PA bzw. PB.

Wie aus Fig. 1 ersichtlich, ist in dem Kommunikationsnetz UMTS zusätzlich eine Dienst-Datenbank DD bereitgestellt. In dieser Dienst-Datenbank DD sind jeweils eine oder mehrere Dienstlogik und Zustandsinförmationen zu einer Vielzahl dort registrierter teilnehmerseitiger Stationen A und B abgespeichert. Nach der Registrierung t1 einer Station A bzw. B bei der entsprechenden Zugangseinrichtung PA bzw. PB sendet die entsprechende Zugangseinrichtung PA bzw. PB zu einem zweiten Zeitpunkt t2 eine Anforderung GET zur Übertragung der Daten bezüglich dieser entsprechend neu registrierten Station A bzw. B an die Dienst-Datenbank DD. Nach dem Empfang der Anforderung GET sendet die Dienst-Datenbank DD Dienstlogik und/oder Zustandsinformationen zu der anfordernden Zugangseinrichtung PA bzw. PB. Die Zugangseinrichtung PA bzw. PB, die vorzugsweise als Signalisierungsserver ausgebildet ist, erhält somit die benötigte Dienstlogik und/oder die entsprechenden Zustandsinformationen über einen die Systemressourcen schonenden Datenweg. Soll die Zugangseinrichtung PA bzw. PB nachfolgend Signalisierungsnachrichten von bzw. zu der Station A bzw. B weiterleiten, so kann sie auf die entsprechende Dienstlogik und die entsprechenden Zustandsinformationen für diese Station A bzw. B zugreifen und die Dienstlogik bzw. die darin angegebenen Anweisungen ausführen. Insbesondere kann entsprechend der Anweisungen der Dienstlogik auf die Zustandsinformationen zugegriffen werden, um diese zu modifizieren.

Vorteilhafterweise kann direkt nach einer Anweisung, Dienstlogik und/oder Zustandsinformationen zu ändern, von der Zugangseinrichtung PA bzw. PB eine entsprechende Aktualisierungsanweisung an die Dienst-Datenbank DD übertragen werden, wie dies anhand der HTTP PUT-Anweisungen zu einem neunten Zeitpunkt t9 skizziert ist. Eine derartige Aktualisierung der Daten in der Dienst-Datenbank DD kann natürlich auch zeitversetzt oder insbesondere beim Aufheben der Zuordnung der Station A, B zu der entsprechenden Zugangseinrichtung PA bzw. PB durchgeführt werden. Die Anweisung, die Dienstlogik und/oder die Zustandsinformationen im Bereich der Zugangseinrichtung PA bzw. PB zu ändern, kann sowohl von der zugeordneten Station A bzw. B als auch von einer unabhängigen weiteren Station, Einrichtung oder Instanz ausgehen.

Die Dienst-Datenbank DD kann sowohl als Bestandteil des Kommunikationsnetzes UMTS als auch als externe Einrichtung ausgebildet sein. Insbesondere ist es auch möglich, die Dienst-Datenbank DD oder eine andere Netzeinrichtung, beispielsweise einen SIP-Proxy, mit Funktionen auszustatten, die eine entsprechende Funktionalität anstelle der Station A bzw. B ausführt. Dies ist dann vorteilhaft, wenn z.B. eine erste Station A, bezüglich der Daten geändert werden sollen, oder eine zweite Station B, zu der hin beispielsweise Nachrichten übersendet werden sollen, nicht am Netz angeschlossen oder aus sonstigem Grund nicht erreichbar ist.

Beispielsweise könnte von der ersten Station A nach dem Registrieren bei einer ersten Zugangseinrichtung PA eine Anforderung INVITE zum Aufbauen einer Kommunikationsverbindung mit der zweiten Station B ausgesendet werden, wobei die zweite Station B z.B. entweder gar nicht am Netz angeschlossen ist oder eine generelle Anweisung zum Weiterleiten von Informationen an eine andere Netzeinrichtung bzw. Netzadresse in der ihr zugeordneten Zugangseinrichtung PB und/oder der Dienst-Datenbank DD hinterlegt hat. In einem solchen Fall würde die Dienstlogik bei Anforderung der zweiten Station B von einem besonderen Proxy oder einer entsprechend erweiterten Dienstdatenbank aus eine Umleitung der Anforderung vornehmen, indem eine entsprechende Änderung der Adressdaten entsprechend der aktuellen Zustandsinformationen durchgeführt wird. Für den Fall, dass die zweite Station B nicht selber am Netz angeschlossen ist, würde die entsprechende Funktion in der Dienst-Datenbank DD oder einer entsprechend bereitgestellten Zugangseinrichtung oder sonstigen Netzeinrichtung durchgeführt werden.

Anhand Fig. 1 wird nachfolgend ein einfaches Ausführungsbeispiel für ein vorteilhaftes Verfahren zum verteilten Ausführen personalisierter Kommunikationsdienste beschrieben. Dabei wird von der dargestellten Netztopologie mit zwei Teilnehmern A, B, ihren jeweiligen Signalisierungsservern bzw. Zugangseinrichtungen PA bzw. PB und der Dienst-Datenbank DD ausgegangen. Die Zuordnung der beiden Stationen A, B, zu den entsprechenden Zugangseinrichtungen, hier Signalisierungsservern PA bzw. PB, soll dabei mittels der für sich bekannten SIP-Register-Nachricht REGISTER erfolgen. Als Schnittstelle zwischen den Zugangseinrichtungen und der Dienst-Datenbank DD soll eine Schnittstelle verwendet werden, die beispielsweise auf dem Hypertext Transfer Protocol HTTP (RFC 2616) basiert. Die Auflösung der Zuordnung einer Station A, B, zu dem zugeordneten Signalisierungsserver bzw. der zugeordneten Zugangseinrichtung PA bzw. PB soll entsprechend durch eine SIP-De-REGISTER-Nachricht erfolgen.

Entsprechend senden Stationen A, B jeweils bei ihrem Anschluss an das Kommunikationsnetz UMTS eine REGISTER-Nachricht zu einem ersten Zeitpunkt t1 an die entsprechende Zugangseinrichtung PA bzw. PB. Die Adressen der entsprechenden Zugangseinrichtungen bzw. SIP-Proxy PA bzw. PB können den Stationen A bzw. B zuvor über übliche Mechanismen bestimmt werden, z.B. über sogenanntes Multicast oder gemäß DHCP (Dynamic Host Configuration Protocol), einem üblichen dynamischen Stationskonfigurierungsprotokoll.

Zu einem nachfolgenden Zeitpunkt t2 fordern die entsprechenden Zugangseinrichtungen PA bzw. PB mittels einer HTTP-GET-Anfrage bei der Dienst-Datenbank DD die Dienstlogik und die Zustandsinformationen zu der entsprechenden registrierten Station A bzw. B an und bekommen diese geliefert.

Zu einem späteren, dritten Zeitpunkt t3 sendet die erste Station A eine Anforderung für den Aufbau einer Verbindung zu der zweiten Station B mittels einer SIP-INVITE-Nachricht an die ihr zugeordnete Zugangseinrichtung PA. Die ihr zugeordnete Zugangsstation PA führt daraufhin die entsprechende Dienstlogik zu einem vierten Zeitpunkt t4 aus. Daraufhin wird von der ersten Zugangseinrichtung PA die Anforderung zum Verbindungsaufbau INVITE zu einem fünften Zeitpunkt t5 an die zweite Zugangseinrichtung PB weitergeleitet.

Zu einem sechsten Zeitpunkt t6 führt die zweite Zugangseinrichtung PB daraufhin die Dienstlogik aus, welche der zweiten Station B zugeordnet ist. Anschließend wird zu einem siebten Zeitpunkt t7 die Verbindungsanforderung INVITE von der zweiten Zugangseinrichtung PB an die zweite Station B weitergeleitet. Damit ist die Verbindung zwischen den Stationen A und B aufgebaut, wobei jeweils die den Stationen zugeordneten Dienstlogik-Anweisungen berücksichtigt wurden, welche zuvor bei deren Registrierung aus der Dienst-Datenbank DD zu den entsprechenden Zugangseinrichtungen PA bzw. PB übertragen wurden.

Sobald sich eine der Stationen A, B aus dem Kommunikationsnetz UMTS lösen möchte oder die Verbindung abbrechen möchte, sendet sie eine De-REGISTRIERUNGS-Nachricht De-REGIST. zu diesem späteren Zeitpunkt t8 an die zugeordnete Zugangseinrichtung PA bzw. PB. Mittels einer HTTP-PUT-Anweisung schreiben die entsprechenden Zugangseinrichtungen PA bzw. PB die während der vorherigen vierten bzw. sechsten Zeitpunkte t4, t6 modifizierten Zustandsinformationen in die Dienst-Datenbank DD zurück, so dass diese für zukünftige Ausführungen aktualisiert abrufbar bereitliegen.

Gemäß alternativen Ausführungsformen kann eine Aktualisierung der entsprechenden Daten in der Dienst-Datenbank DD auch direkt von einer Station A bzw. B initialisiert werden, indem diese beim ersten Registrieren im Kommunikationsnetz oder zu einem späteren Zeitpunkt entsprechende Anweisungen über die Zugangseinrichtungen PA bzw. PB überträgt. Aktualisierungen können natürlich auch von einer anderen Einrichtung oder Instanz im Kommunikationsnetz mit entsprechender Berechtigung vorgenommen werden.

## Patentansprüche

1. Verfahren zum Bereitstellen von Kommunikationsdiensten in einem Kommunikationssystem (UMTS), bei dem
- eine Station (A, B) eine Verbindung oder Signalisierung mit einer oder über eine Zugangseinrichtung (PA bzw. PB) des Kommunikationssystems aufbaut und
- bei dem in der Zugangseinrichtung (PA bzw. PB) oder einer anderen Netzeinrichtung in Zusammenhang mit der Verbindung bzw. Signalisierung dienstbezogene Anweisungen unter Bezug auf eine Dienstlogik zu der Station (A) oder einer angeforderten Station (B) netzseitig ausgeführt werden, **dadurch gekennzeichnet, dass**
- von der die Anweisung ausführenden Einrichtung (PA bzw. PB) die Dienstlogik (service logic) bezüglich der Station (A bzw. B) aus einer netzseitigen Dienst-Datenbank (DD), in der die Dienstlogik gespeichert ist, abgerufen wird.

2. Verfahren nach Anspruch 1, bei dem
zusammen mit der Dienstlogik Zustandsinformationen aus der Dienst-Datenbank (DD) abgerufen oder zu dieser hin übertragen werden.

3. Verfahren nach Anspruch 1 oder 2, bei dem
nach einer Veränderung der Dienstlogik oder von Zustandsinformationen von der die Dienstlogik ausführenden Einrichtung ausgehend die Dienstlogik und/oder Zustandsinformationen in der Dienst-Datenbank (DD) aktualisiert werden.

4. Verfahren nach Anspruch 2 oder 3, bei dem
die Aktualisierung der Daten in der Dienst-Datenbank (DD) nach dem Abbau einer Kommunikationsverbindung und/oder nach dem Trennen (t8: De-REGIST.) der Station (A bzw. B) von der zugeordneten Zugangseinrichtung (PA bzw. PB) bzw. der die Dienstlogik ausführenden Einrichtung durchgeführt wird.

5. Verfahren nach einem vorstehenden Anspruch, bei dem die Signalisierung zwischen der Station (A bzw. B) und zumindest der zugeordneten Zugangseinrichtung (PA bzw. PB) mittels des Session Initiation Protocol (SIP / Sitzungsinitiierungsprotokolls) durchgeführt wird.

6. Verfahren nach einem vorstehenden Anspruch, bei dem der Austausch von Daten mit der Dienst-Datenbank (DD) über eine auf dem Hypertext Transfer Protocol (HTTP) basierende Schnittstelle durchgeführt wird.

7. Netzseitige Netzvorrichtung (DD) zum Durchführen eines Verfahrens gemäß einem vorstehenden Anspruch mit
- einem Speicher zum Speichern von stationsbezogenen Dienstlogikdaten und
- einer Schnittstelle zum Austauschen solcher Daten mit einer eine solche Dienstlogik ausführenden Netzeinrichtung (PA bzw. PB).

## Claims

1. Method for the provision of communication services in a communication system (UMTS), in which
- a station (A, B) sets up a connection or signaling to or via an access device (PA or PB) of the communication system, and
- in which the network executes service-related instructions in the access device (PA or PB) or in another network device relating to the connection or signaling with reference to service logic for the station (A) or for a requested station (B),
**characterized in that**
- the device (PA or PB) executing the instruction retrieves the service logic for the station (A or B) from a network-end service database (DD) which stores the service logic.

2. Method according to Claim 1, in which
state information is retrieved from the service database (DD) or transmitted thereto together with the service logic.

3. Method according to Claim 1 or 2, in which
following an alteration in the service logic or in state information, the service logic and/or state information is/are updated in the service database (DD) from the device executing the service logic.

4. Method according to Claim 2 or 3, in which
the data in the service database (DD) are updated following the cleardown of a communication link and/or following the disconnection (t8: De-REGIST.) of the station (A or B) from the associated access device (PA or PB) or from the device executing the service logic.

5. Method according to a preceding claim, in which
the signaling between the station (A or B) and at least the associated access device (PA or PB) is performed using the Session Initiation Protocol (SIP).

6. Method according to a preceding claim, in which
the interchange of data with the service database (DD) is performed via an interface based on the Hypertext Transfer Protocol (HTTP).

7. Network-end network apparatus (DD) for performing a method according to a preceding claim having
- a memory for storing station-related service logic data and
- an interface for interchanging such data with a network device (PA or PB) executing such service logic.

## Revendications

1. Procédé pour mettre à disposition des services de communication dans un système de communication (UMTS), dans lequel :
- une station (A, B) établit une liaison ou signalisation avec ou via un dispositif d'accès (PA resp. PB) du système de communication et
- des instructions relatives aux services sont exécutées, côté réseau, dans le dispositif d'accès (PA resp. PB) ou un autre dispositif de réseau en rapport avec la liaison resp. la signalisation en référence à une logique de service relative à la station (A) ou à une station demandée (B),
**caractérisé en ce que**
- la logique de service (service logic) relative à la station (A resp. B) est tirée, par le dispositif (PA resp. PB) qui exécute l'instruction, d'une base de données de services (DD) côté réseau dans laquelle la logique de service est stockée.

2. Procédé selon la revendication 1, dans lequel des informations d'état sont tirées de la base de données de services (DD) conjointement avec la logique de service ou lui sont transmises.

3. Procédé selon la revendication 1 ou 2, dans lequel, après une modification de la logique de service ou d'informations d'état, la logique de service et/ou les informations d'état sont mises à jour dans la base de données de services (DD) à partir du dispositif qui exécute la logique de service.

4. Procédé selon la revendication 2 ou 3, dans lequel la mise à jour des données dans la base de données de services (DD) est effectuée après la fermeture d'une liaison de communication et/ou après que la station (A resp. B) a été coupée (t8 : De-REGIST.) du dispositif d'accès associé (PA resp. PB) resp. du dispositif qui exécute la logique de service.

5. Procédé selon une revendication précédente, dans lequel la signalisation entre la station (A resp. B) et au moins le dispositif d'accès associé (PA resp. PB) est effectuée au moyen du protocole d'initialisation de session (SIP / Session Initiation Protocol).

6. Procédé selon une revendication précédente, dans lequel l'échange de données avec la base de données de service (DD) est exécutée via une interface basée sur le protocole de transfert hypertexte (HTTP).

7. Dispositif de réseau côté réseau (DD) pour exécuter un procédé selon une revendication précédente, avec
- une mémoire pour stocker des données de logique de service relatives à la station et
- une interface pour l'échange de telles données avec un dispositif de réseau (PA resp. PB) exécutant une telle logique de service.
